# EUROPEAN PATENT APPLICATION

(11) **EP 2 134 114 A1**
(43) Date of publication of application: **16.12.2009**
(21) Application number: 08290534.0
(22) Date of filing: 10.06.2008
(51) Int. Cl.: H04W 12/08, H04L 29/06

(54) **Method for providing to an end device access to a service, to an end device and to a mobile terminal realizing such a method**

(71) Applicant: Alcatel Lucent, 75008 Paris (FR)
(72) Inventor: Trappeniers, Lieven, 2200 Herentals (Noorderwijk) (BE); Heikens, Heico, 2060 Antwerp (BE); Lou, Zhe, 2000 Antwerp (BE); Lauwers, Thais, 1000 Brussels (BE); Godon, Marc Bruno Frieda, 1840 Londerzeel (BE); Criel, Johan Georges Prosper, 9000 Gent (BE); Clays, Laurence Annie Hugo Marie, 9000 Gent (BE); Coppens, Toon, 2500 Lier (BE)
(74) Representative: Narmon, Gisèle Marie Thérèse

(57) **Abstract**

The invention relates to a method for providing to an end device access to a service in accordance with a specific profile. The method including the steps of :
- sending information identifying the specific profile and identifying the end device to a transfer server,
- the transfer server obtaining the specific profile from a database based on that information,
- the transfer server identifying a service manager able to provide the service based on said specific profile,
- the transfer server requesting the service manager to provide to the end device access to the service. The information is obtained by proximity based interaction between the end device and a mobile device, and it consists of a first part identifying the end device and of a second part identifying the specific profile. The second part is stored in the mobile device.

## Description

The subject invention relates to a method for providing to an end device access to a service in accordance with a specific profile, said method including the steps of :
sending information identifying said specific profile and said end device to a transfer server,
said transfer server obtaining said specific profile from a database based on said information,
said transfer server identifying a service manager able to provide said service based on said specific profile ,
said transfer server requesting said service manager to provide to said end device access to said service.

Such a method is described in the article "Advanced Service Provisioning based on Mobile Agents" from Peyman Farjami, Carmelita Görg and Frank Bell. Therein a Terminal Agent sends a service request to a Provider Agent to check if a user is authorized to access a required service. If so, the Provider Agent instructs a User Interface Agent to transfer the appropriate service specific User Interface to the Terminal.

A disadvantage of the method described in this article is that the Terminal Agent has to be aware of the information/profile specific for the requested service.

It is an object of the subject invention to provide a method as described in the known article, but without the above mentioned drawback. This object is realized by the method according to the invention which is **characterised in that** said information is obtained by proximity based inte>raction between said end device and a mobile device, and that it consists of a first part identifying said end device and of a said second part identifying said specific profile, said second part being stored in said mobile device. In this way the end device does not have to we aware of information specific for said service.

A first characteristic of the invention is that said method contains the additional step of said mobile device obtaining said second part of said information by proximity based interaction with another end device. In this way the information specific for the service profile has not to be pre-stored in the mobile device, and the service can be provided in accordance with a profile used by another device.

A further characteristic of the invention is that in that said mobile device is a mobile terminal with an RFID tag reader, that said end device comprises an RFID tag and that said RFID tag contains said first part of said information, said RFID tag reader capturing said first part of said information and said mobile device combining said first part of said information with said second part of information to obtain said information, and sending said information to said transfer server. In this way the end device does not need to be adapted to enable communication with the transfer server in order to obtain the requested service. An alternative hereto is that said mobile device is a mobile terminal with a first RFID transceiver, that said end device comprises a second RFID transceiver and that said first part of said information is transmitted from said second transceiver to said first transceiver, said mobile device combining said first part of said information with said second part of information to obtain said information, and sending said information to said transfer server. Possibly one of the 2 mentioned RFID transceivers can emulate an RFID tag.

An alternative to the above first characteristic is that said mobile device comprises an RFID tag, and that said end device contains an RFID tag reader, said second part of said information being stored in said tag and said first part of said information being stored in said end device, said RFID tag reader capturing said second part of said information and said end device combining said first part of said information with said second part of information to obtain said information and sending said information to said transfer server, as a result of which the mobile terminal is not involved in the communication with the transfer server.

The end device can for instance be a set-top box, a PC or a residential gateway, and the end device can be a mobile terminal.

In addition to the above described method, the invention also relates to a mobile device and to an end device for realizing this method.

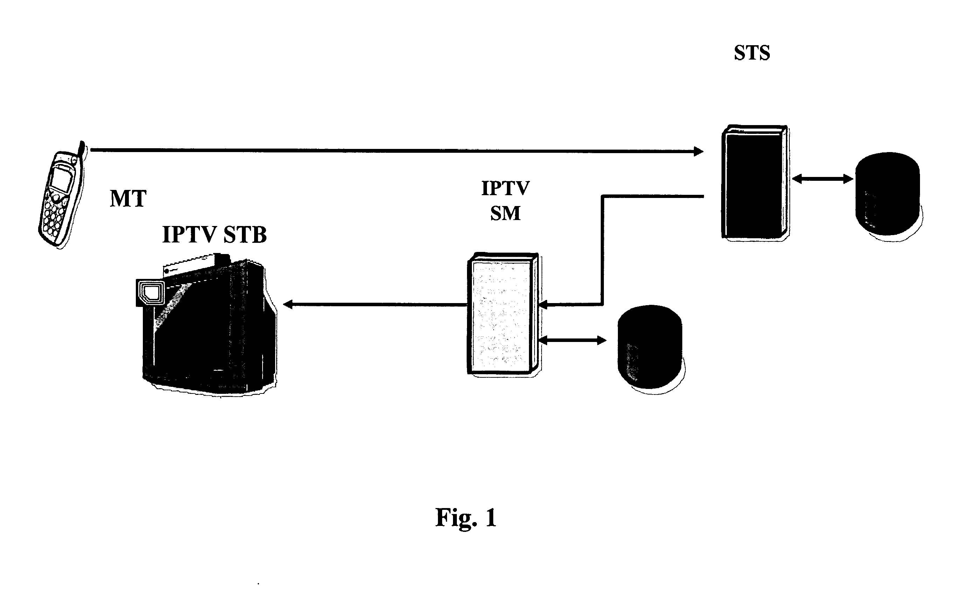

These and other aspects of the invention will be apparent from and elucidated with reference to figs 1, 2 and 3 that represent 3 systems wherein the method according to the invention is realized.

It has to be noted that the expression "for" in for example "for receiving", "for transmitting", "for detecting", "for adjusting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

It has also to be noted that Proximity based interaction can be defined as all interaction means and methods where physical closeness of objects, devices or persons is involved. Proximity-based interaction can be based on radio-frequency detection or communication, RFID, NFC, IR, computer-vision, capacitive detection, light sensors, ... The also used terminology touch-based interaction should be regarded as a sub-set of Proximity based interaction .

In addition RFID technology referred herein is intended to also include Near Field Communication, EPC (Electronic Product Code) Global and related technologies and that the tag and tag reader mentioned for the implementation of this RFID technology can be replaced by barcodes, IR communication, image recognition and the like.

Figure 1 represents a mobile terminal MT able to interact with a Subscription Transfer Server STS, an IPTV set-top box, IPTV STB, being controlled by an IPTV Subscription Manager, IPTV SM, that interacts with STS. STS is connected to a User Subscription Database USD. MT is equipped with an RFID tag reader (not shown) and IPTV STB contains an RFID tag (also not shown) or can alternatively have an RFID tag glued to it. When a user touches IPTV STB with MT, capturing means included in MT capture the identity of the tag read by the tag reader. MT has its mobile phone identity stored therein and combines the captured identity with its own stored one, processes both identities and sends the combined information to STS. STS then retrieves from USD, based on the received information, data indicative for the a service profile of the user and concerning the subscriptions and services (such as channels, VoD) available to the user and instructs the relevant IPTV SM to activate these at the location of the touched IPTV STB. USD contains a precoded link between the combined information and the above mentioned data. Depending on what information defines the subscriptions/services, the captured information can in an alternative embodiment be a unique set-top box identity, a URI (Uniform Resource Identifier) pointing to a service endpoint specific for said set-top box or an IP-address of said set-top box stored on the tag. Also, the information part from the mobile terminal can alternatively be a telephone number associated with the mobile phone, a specific identity for a SIM card in the mobile phone, an identity specific for a user operating the mobile phone or a user name. In addition, the mobile phone can be replaced by a PDA. The identity stored in the mobile phone can be pre-installed, but in an alternative embodiment, the MT can be adapted to be able to retrieve the needed identity from another IPTV set-top box. In this way a user, can f.i. have access to his home IPTV subscriptions via a set-top box in his holiday apartment.

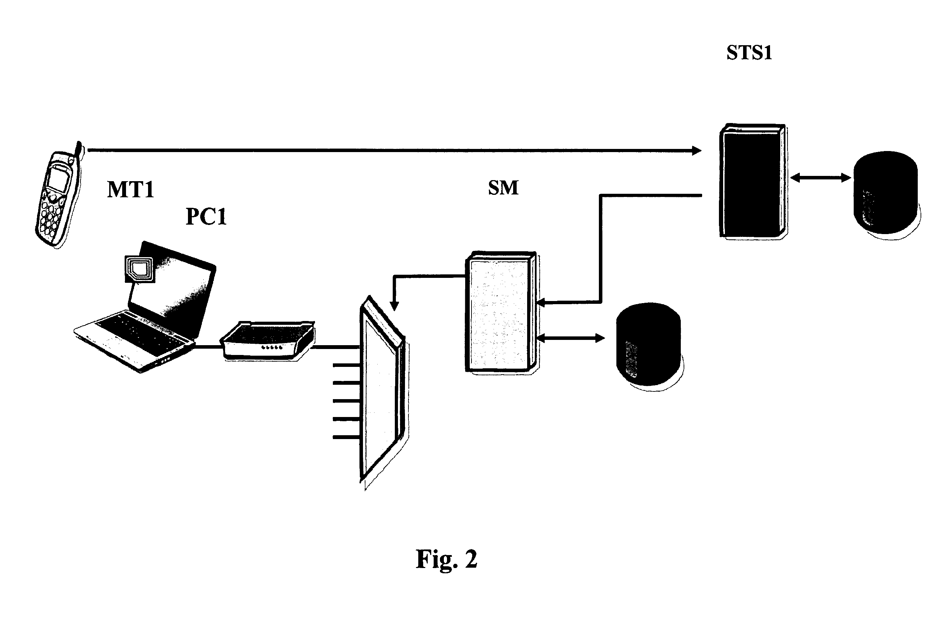

Figure 2 shows an alternative system realizing the method according to the subject invention, with a mobile terminal MT1 able to interact with a Subscription Transfer Server STS1, a PC, PC1, being controlled by a Subscription Manager, SM, that interacts with STS1. STS1 is connected to a User Subscription Database USD1 relevant for PC1. MT1 is equipped with an RFID tag reader (not shown) and the screen of PC1 has an RFID tag glued to it. When a user touches PC1 with MB1, the identity of the tag is captured by the tag reader. MB1 combines this identity with its mobile phone identity and sends the combined information to STS1. STS1 then retrieves based on the received information information concerning the subscriptions and services available to the user and intructs SM to activate these at the location of the touched PC1. This subscription can f.i. be the user's DSL subscription at home. In that case SM is a DSL Subscription Manager. PC1 can f.i. be a PC at an Internet Café. Depending on what information defines the subscriptions/services, the captured information can in an alternative embodiment be a tag id specific for PC1, an identity specific for PC1, an identity specific for a user operating PC1, a user name of a user operating PC1 or an IP address of PC1. Again, the information part from the mobile terminal can alternatively be a telephone number associated with the mobile phone, a specific identity for a SIM card in the mobile phone, an identity specific for a user operating the mobile phone or a user name, and can be replaced by a PDA or an RFID token. As with the set-top box embodiments, here again the necessary information can be pre-stored in the mobile terminal or can be retrieved from another PC.

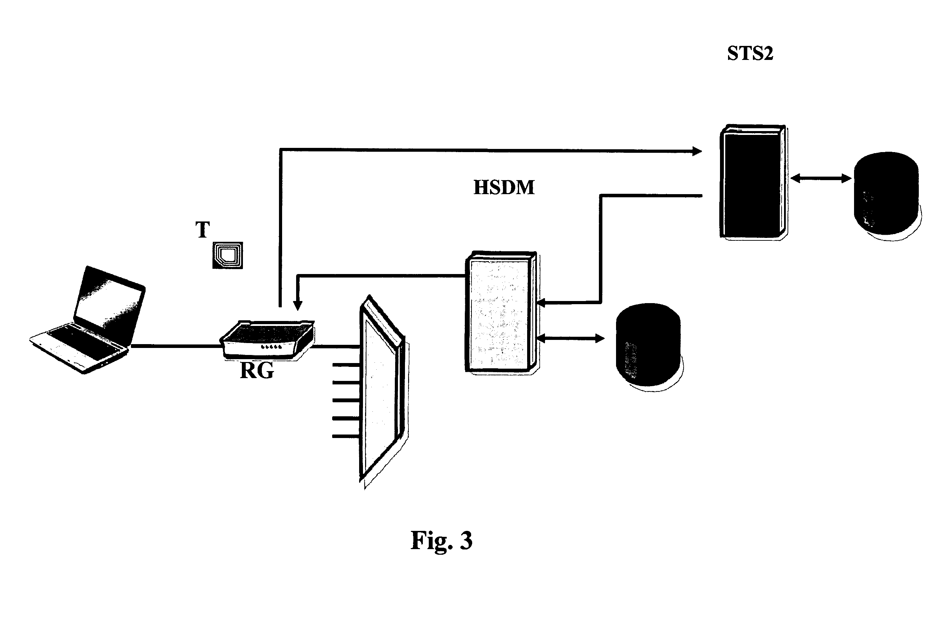

Figure 3 shows yet another alternative system realizing the method according to the subject invention, with a token T (containing a tag) carried by a user, a Residential Gateway RG able to interact with a Subscription Transfer Server STS2, and with a Home Service/Device Manager HSDM. STS2 is connected to a User Subscription Database USD2 relevant for HSDM. RG is equipped with a tag reader (not shown). When a user touches RG with T, the identity of the tag is captured by the tag reader. RG combines this identity with its own identity and sends the combined information to STS2. STS2 then retrieves based on the received information information concerning the subscriptions and services available to MG and intructs HSDM to activate these at the location of the touched MG. This subscription can f.i. be the user's own Firewall settings whilst the Residential Gateway is is located at a friend's home. An alternative implementation of the system shown in figure 3 would be to have a tag attached to the residential gateway and a tag reader carried by the user.

Instead of having a combination tag/tag reader as in the embodiments above, both the terminal and the end device (Set-top box, PC, Residential gateway) can be equipped with interworking RFID transceivers. Alternatively one of these transceivers can emulate an RFID tag.

The elements of the above described embodiments being well known in the art are therefore not being described in details. In addition, since it is obvious for a person skilled in the art to realize MT, MT1 and RG based on the functional description thereof, this is not descibed in details

## Claims

1. Method for providing to an end device access to a service in accordance with a specific profile, said method including the steps of :
- sending information identifying said specific profile and identifying said end device to a transfer server,
- said transfer server obtaining said specific profile from a database based on said information,
- said transfer server identifying a service manager able to provide said service based on said specific profile ,
- said transfer server requesting said service manager to provide to said end device access to said service,
**characterized in that** said information is obtained by proximity based interaction between said end device and a mobile device, and that it consists of a first part identifying said end device and of a said second part identifying said specific profile, said second part being stored in said mobile device.

2. Method according to claim 1, **characterized in that** said said method contains the additional step of said mobile device obtaining said second part of said information by proximity based interaction with another end device.

3. Method according to claim 1 , **characterized in that** said mobile device is a mobile terminal with an RFID tag reader, that said end device comprises an RFID tag and that said RFID tag contains said first part of said information, said RFID tag reader capturing said first part of said information and said mobile device combining said first part of said information with said second part of information to obtain said information, and sending said information to said transfer server.

4. Method according to claim 2 , **characterized in that** said mobile device is a mobile terminal with an RFID tag reader, that said end device comprises an RFID tag and that said RFID tag contains said first part of said information, said RFID tag reader capturing said first part of said information and said mobile device combining said first part of said information with said second part of information to obtain said information, and sending said information to said transfer server.

5. Method according to claim 1, **characterized in that** said mobile device is a mobile terminal with a first RFID transceiver, that said end device comprises a second RFID transceiver and that said first part of said information is transmitted from said second transceiver to said first transceiver, said mobile device combining said first part of said information with said second part of information to obtain said information, and sending said information to said transfer server.

6. Method according to claim 2, **characterized in that** said mobile device is a mobile terminal with a first RFID transceiver, that said end device comprises a second RFID transceiver and that said first part of said information is transmitted from said second transceiver to said first transceiver, said mobile device combining said first part of said information with said second part of information to obtain said information, and sending said information to said transfer server.

7. Method according to claim 1, **characterized in that** said mobile device comprises an RFID tag, and that said end device contains an RFID tag reader, said second part of said information being stored in said RFID tag and said first part of said information being stored in said end device, said RFID tag reader capturing said second part of said information and said end device combining said first part of said information with said second part of information to obtain said information and sending said information to said transfer server.

8. Method according to claim 3, 4, 5, 6 or 7, **characterized in that** said end device is a first IPTV set-top box and that said first part of said information contains at least either one of a tag id specific for said first IPTV set-top box, a unique set-top box identity, a Uniform Resource Identifierpointing to a service endpoint specific for said set-top box, an IP-address of said set-top box.

9. Method according to claim 3 or 5, **characterized in that** said mobile device is a mobile phone and that said second part of said information contains at least either one of a mobile phone id specific for said mobile phone, a telephone number associated with said mobile phone, a specific identity for a SIM card in said mobile phone, an identity specific for a user operating said mobile phone, a user name.

10. Method according to claim 3 or 4, **characterized in that** said end device is a first PC and that said first part of said information contains at least either one of a tag id specific for said PC, an identity specific for said PC, an identity specific for a user operating said PC, a user name of a user operating said PC, an IP address of said PC.

11. Method according to claims 3, 4, 5, 6 or 7, **characterized in that** said end device is a residential gateway.

12. Mobile terminal to realize a method according to claim 3 or 4, said terminal including an RFID tag reader, capturing means adapted to capture first information by means of proximity based interaction from a tag identifying an end device , memory means adapted to store second information related to a service profile, processing means adapted to process said first information and said second information to obtain combined information indicative of a service in accordance with said service profile to be provided to said end device and transmission means adapted to send said combined information to a transfer server.

13. Mobile terminal to realize a method according to claim 3, said terminal including an RFID transceiver, capturing means adapted to capture first information from another transceiver included in an end device said first information identifying said end device , memory means adapted to store second information related to a service profile, processing means adapted to process said first information and said second information to obtain combined information indicative of a service in accordance with said service profile to be provided to said end device and transmission means adapted to send said combined information to a transfer server.

14. Mobile terminal to realize a method according to claim 4, said terminal including a first RFID transceiver adapted to capture first information from a second RFID transceiver included in an end device said first information identifying said end device , memory means adapted to store second information related to a service profile, second capturing means adapted to capture said second information from a third RFID transceiver included in another end device, processing means adapted to process said first information and said second information to obtain combined information indicative of a service in accordance with said service profile to be provided to said end device and transmission means adapted to send said combined information to a transfer server.

15. End device to realize a method according to claim 7, said end device including memory means adapted to store first information identifying said end device, capturing means adapted to capture second information related to a service profile by means of proximity based interaction, processing means adapted to process said first information and said second information to obtain combined information indicative of a service in accordance with said service profile to be provided to said end device and transmission means adapted to send said combined information to a transfer server.
